(19) Europäisches Patentamt
European Patent Office
Office européen des brevets

(11) **EP 2 876 412 B1**

(12) **EUROPÄISCHE PATENTSCHRIFT**

(45) Veröffentlichungstag und Bekanntmachung des Hinweises auf die Patenterteilung:
**11.03.2020 Patentblatt 2020/11**

(51) Int Cl.:
***G01C 19/5726*** *(2012.01)*

(21) Anmeldenummer: **14191574.4**

(22) Anmeldetag: **04.11.2014**

(54) **Inertialsensor sowie Vorrichtung und Verfahren zum Betreiben eines Inertialsensors**

Inertial sensor and device and method for operating an inertial sensor

Capteur inertiel ainsi que dispositif et procédé de fonctionnement d'un capteur inertiel

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.11.2013 DE 102013223825**

(43) Veröffentlichungstag der Anmeldung:
**27.05.2015 Patentblatt 2015/22**

(73) Patentinhaber: **ROBERT BOSCH GMBH**
**70442 Stuttgart (DE)**

(72) Erfinder: **Curcic, Michael**
**70563 Stuttgart (DE)**

(56) Entgegenhaltungen:
EP-A2- 0 840 092     DE-A1-102012 200 132
US-A1- 2009 145 230     US-A1- 2010 043 551
US-B2- 7 616 078

**Beschreibung**

Stand der Technik

Die vorliegende Erfindung bezieht sich auf einen Inertialsensor, auf ein Verfahren zum Betreiben eines Inertialsensors sowie auf eine entsprechende Vorrichtung zum Betreiben eines Inertialsensors.

Bewegungen und Bewegungsänderungen, die ein Objekt ausführt, können unter Verwendung eines mit dem Objekt verbundenen Inertialsensors erfasst werden. Die DE 10 2012 200 132 A1 beschreibt einen Drehratensensor und ein Verfahren zum Betrieb eines Drehratensensors. Die US 2010/043551 A1 offenbart einen Sensor mit einem zwei Elektroden aufweisenden Sensorkörper sowie mit einer Schaltung, über die alternierend zum Auslenken des Sensorkörpers ein Antriebssignal an zwei mit den Elektroden gekoppelte Gegenelektroden angelegt und zum Erfassen der Auslenkung ein Sensorsignal an den Gegenelektroden abgegriffen werden kann. Die EP 0 840 092 A2 offenbart einen Sensor mit einem eine erste Elektrode und eine zweite Elektrode aufweisenden Sensorkörper sowie mit einer Schaltung, über die zum Auslenken des Sensorkörpers ein Antriebssignal an eine mit der ersten Elektrode gekoppelte erste Gegenelektroden angelegt und zum Erfassen der Auslenkung ein Sensorsignal an einer mit der zweiten Elektrode gekoppelten zweiten Gegenelektrode abgegriffen wird.

Offenbarung der Erfindung

Vor diesem Hintergrund wird mit dem hier vorgestellten Ansatz ein Inertialsensor, ein Verfahren zum Betreiben eines Inertialsensors gemäß den Hauptansprüchen 1, 5 und 10 vorgestellt. Vorteilhafte Ausgestaltungen ergeben sich aus den jeweiligen Unteransprüchen und der nachfolgenden Beschreibung.

Es wird ein Inertialsensor mit folgenden Merkmalen vorgestellt:

einem ersten Körper mit einer ersten Elektrode und einer zweiten Elektrode;

einem relativ zu dem ersten Körper beweglich gelagerten zweiten Körper mit einer dritten Elektrode und einer vierten Elektrode, wobei die erste Elektrode und die dritte Elektrode einen ersten Kondensator mit einer veränderbaren ersten Kapazität ausbilden und die zweite Elektrode und die vierte Elektrode einen zweiten Kondensator mit einer veränderbaren zweiten Kapazität ausbilden;

einer ersten Schnittstelle zum Bereitstellen eines Antriebssignals an der ersten Elektrode und an der zweiten Elektrode, um eine Relativbewegung zwischen dem ersten Körper und dem zweiten Körper zu bewirken; und

einer zweiten Schnittstelle zum Abgreifen eines, eine erste Kapazitätsänderung der ersten Kapazität und eine zweite Kapazitätsänderung der zweiten Kapazität abbildenden Signals an der dritten Elektrode und an der vierten Elektrode, um eine Relativposition des ersten Körpers zu dem zweiten Körper zu erfassen.

Unter einem Inertialsensor kann ein Beschleunigungssensor und alternativ oder ergänzend ein Drehratensensor verstanden werden. Der Inertialsensor kann einen Grundkörper und einen Sensorkörper aufweisen. Der Grundkörper kann an einem Messpunkt befestigt werden. Der Sensorkörper ist dann gegenüber dem Messpunkt schwingungsfähig gelagert. Der erste Körper kann der Sensorkörper sein, während der zweite Körper der Grundkörper ist. Umgekehrt kann der erste Körper der Grundkörper sein, während der zweite Körper der Sensorkörper ist.

Bei einem Inertialsensor kann eine Masse des Inertialsensors durch Trägheitskräfte ausgelenkt werden, wenn der Inertialsensor beispielsweise einer linearen oder rotatorischen Beschleunigung ausgesetzt wird. Die Masse kann federgelagert und gedämpft gelagert sein. Die Masse kann durch ein Antriebssignal zu einer harmonischen Schwingung angeregt werden. Die Trägheitskräfte können die Schwingung stören und die Störung kann gemessen werden.

Um die harmonische Schwingung längerfristig stabil aufrechterhalten zu können, ist eine Regelung des Antriebssignals durch einen Regler erforderlich. Die gelagerte Masse ist dabei die Regelstrecke. Das Antriebssignal ist die Stellgröße, die auf die Regelstrecke wirkt. Eine Position der Masse relativ zum Inertialsensor ist die Regelgröße. Die Regelgröße wird zum Regler zurückgeführt. Der Regler passt die Stellgröße unter Verwendung der Regelgröße an.

Bei dem hier vorgestellten Ansatz kann die Regelgröße, also die Position der Masse direkt von Antriebselektroden der Masse ausgelesen werden, da das Antriebssignal nur an eine Seite der Antriebselektroden angelegt wird. Über die andere Seite der Antriebselektroden wird die Position zum Rückführen zum Regler ausgelesen.

Die erste Elektrode und die zweite Elektrode können entgegengesetzt zueinander ausgerichtet sein. Entsprechend können die dritte Elektrode und die vierte Elektrode entgegengesetzt zueinander ausgerichtet sein. Auf diese Weise können die Kapazitäten durch zwei benachbarte Elektrodenpaare ausgebildet werden.

Die erste Kapazität kann abhängig von einem ersten Abstand zwischen der ersten Elektrode und der dritten Elektrode sein. Entsprechend kann die zweite Kapazität abhängig von einem zweiten Abstand zwischen der zweiten Elektrode und der vierten Elektrode sein. Auf diese Weise kann auf ein bewährtes Prinzip zum Bilden von Kapazitäten zurückgegriffen werden.

Die erste Elektrode und die dritte Elektrode können als Kammelektroden ausgebildet sein, die ineinander kämmen. Die erste Kapazität kann abhängig von einer ersten Überlappung zwischen der ersten Elektrode und der dritten Elektrode sein. Die erste Elektrode und die dritte Elektrode können Teil einer entsprechenden Kammelektrode mit einer Mehrzahl von ersten und dritten Elektroden sein. Durch eine solche Kammelektrode kann eine Relativbewegung zwischen den Elektroden sehr genau bestimmt werden.

In entsprechender Weise können die zweite Elektrode und die vierte Elektrode als Kammelektroden ausgebildet sein, die ineinander kämmen. Die zweite Kapazität kann abhängig von einer zweiten Überlappung zwischen der zweiten Elektrode und der vierten Elektrode sein. Beispielsweise können zwei Elektrodenkämme parallel zueinander angeordnet sein. Auf diese Weise kann der Raumbedarf der Elektroden gering gehalten werden.

Weiterhin wird ein Verfahren zum Betreiben eines Inertialsensors gemäß dem hier vorgestellten Ansatz vorgestellt, wobei das Verfahren die folgenden Schritte aufweist:

Bereitstellen eines Antriebssignals für den ersten Kondensator und für den zweiten Kondensator an der ersten Schnittstelle, wobei an der ersten Elektrode das Antriebssignal mit einer gegenüber der zweiten Elektrode invertierten Amplitude bereitgestellt wird, um den ersten Körper zu einer Schwingung anzuregen;

Abgreifen eines durch die Schwingung resultierenden Signals an der zweiten Schnittstelle, um eine Phasenlage der Schwingung zu erfassen;

Anpassen einer Kreisfrequenz des Antriebssignals unter Verwendung des Signals, um den Sensorkörper in Resonanz schwingen zu lassen.

Ein Antriebssignal kann eine sinusförmige elektrische Spannung mit einer bestimmten Kreisfrequenz und einer bestimmten maximalen Spannung als Amplitude sein. Ein Signal kann eine sich näherungsweise sinusförmig ändernde elektrische Größe sein. Das Signal kann Oberschwingungen aufweisen. In Resonanz kann eine Relativschwingung zwischen dem ersten Körper und dem zweiten Körper eine maximale Amplitude aufweisen. Dabei kann das Antriebssignal mit einer geringen Amplitude bereitgestellt werden.

An der zweiten Schnittstelle wird erfindungsgemäß ein Stromfluss abgegriffen. Das Verfahren weist einen Schritt des Wandelns auf, in dem der Stromfluss in eine Spannung umgewandelt wird, wobei die Kreisfrequenz unter Verwendung der Spannung angepasst werden kann. Somit kann die Kreisfrequenz vorteilhafterweise unter Verwendung einer Spannung anstelle eines Stroms angepasst werden.

Das Verfahren kann einen Schritt des Verschiebens aufweisen, in dem eine Phase des Signals um einen vorbestimmten Winkel verschoben wird. Dadurch können beispielsweise Signallaufzeiten kompensiert werden.

Die Kreisfrequenz kann unter Verwendung einer Phasenregelschleife angepasst werden. Dadurch kann die Kreisfrequenz sehr genau angepasst werden.

Die Kreisfrequenz kann unter Verwendung eines Lock-in Verstärkers angepasst werden. Durch einen solchen Verstärker können Signalstörungen ausgefiltert werden.

Ferner wird eine Vorrichtung zum Betreiben eines Inertialsensors gemäß dem hier vorgestellten Ansatz vorgestellt, wobei die Vorrichtung die folgenden Merkmale aufweist:

eine Einrichtung zum Bereitstellen eines Antriebssignals für den ersten Kondensator und für den zweiten Kondensator an der ersten Schnittstelle, wobei an der ersten Elektrode das Antriebssignal mit einer gegenüber der zweiten Elektrode invertierten Amplitude bereitgestellt wird, um den ersten Körper zu einer Schwingung anzuregen;

eine Einrichtung zum Abgreifen eines durch die Schwingung resultierenden Signals an der zweiten Schnittstelle, um eine Phasenlage der Schwingung zu erfassen, wobei das Signal ein zwischen der dritten Elektrode und der vierten Elektrode resultierender elektrischer Stromfluss ist, wobei der elektrische Stromfluss ein Maß für eine Änderung einer Relativposition des ersten Körpers zu dem zweiten Körper ist;

eine Einrichtung zum Anpassen einer Kreisfrequenz des Antriebssignals unter Verwendung des Signals, um den ersten Körper in Resonanz schwingen zu lassen.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Der hier vorgestellte Ansatz wird nachstehend anhand der beigefügten Zeichnungen beispielhaft näher erläutert. Es zeigen:

Fig. 1    eine Darstellung eines Inertialsensors gemäß einem Ausführungsbeispiel der vorliegenden Erfindung;

Fig. 2    ein Ablaufdiagramm eines Verfahrens zum Betreiben eines Inertialsensors gemäß einem Ausführungsbeispiel der vorliegenden Erfindung;

Fig. 3    ein Blockschaltbild einer Vorrichtung zum Betreiben eines Inertialsensors gemäß einem Ausführungsbeispiel der vorliegenden Erfindung;

Fig. 4    eine Darstellung eines schematischen Aufbaus einer Auswerteschaltung mit einer Phasenregelschleife gemäß einem Ausführungsbeispiel der vorliegenden Erfindung;

Fig. 5    eine Darstellung eines schematischen Aufbaus einer Auswerteschaltung für einen Inertialsensor gemäß einem Ausführungsbeispiel der vorliegenden Erfindung; und

Fig. 6    eine Darstellung eines Inertialsensors mit Kammelektroden gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

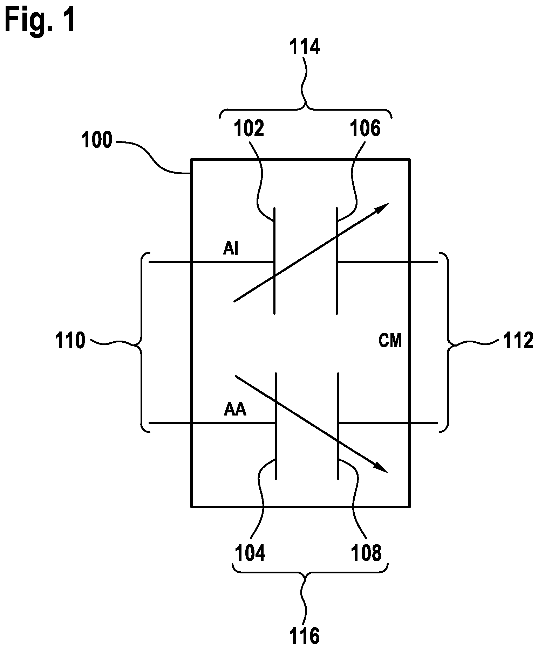

Fig. 1 zeigt ein Schaltbild eines Inertialsensors 100 gemäß einem Ausführungsbeispiel der vorliegenden Erfindung. Der Inertialsensor 100 weist eine erste Elektrode 102, eine zweite Elektrode 104, eine dritte Elektrode 106 und eine vierte Elektrode 108 sowie eine erste Schnittstelle 110 und eine zweite Schnittstelle 112 auf. Die erste Elektrode 102 und die zweite Elektrode 104 sind an einem hier nicht dargestellten ersten Körper angeordnet. Die dritte Elektrode 106 und die vierte Elektrode 108 sind an einem hier ebenfalls nicht dargestellten zweiten Körper angeordnet. Der erste Körper ist relativ zu dem zweiten Körper beweglich gelagert.

Die erste Elektrode 102 und die dritte Elektrode 106 bilden einen ersten Kondensator 114 mit einer veränderbaren ersten Kapazität aus. Die zweite Elektrode 104 und die vierte Elektrode 108 bilden einen zweiten Kondensator 116 mit einer veränderbaren zweiten Kapazität aus. Die Kapazitäten der Kondensatoren sind dabei abhängig von einer Relativposition der beiden Elektroden zueinander.

Über die erste Schnittstelle 110 kann ein Antriebssignal an der ersten Elektrode 102 und an der zweiten Elektrode 104 bereitgestellt werden, um eine Relativbewegung zwischen dem ersten Körper und dem zweiten Körper zu bewirken. Über die zweite Schnittstelle 112 kann ein, eine erste Kapazitätsänderung der ersten Kapazität und eine zweite Kapazitätsänderung der zweiten Kapazität abbildendes Signal an der dritten Elektrode 106 und an der vierten Elektrode 108 abgegriffen werden, um die Relativposition des ersten Körpers zu dem zweiten Körper zu erfassen.

In einem Ausführungsbeispiel sind die erste Elektrode 102 und die zweite Elektrode 104 entgegengesetzt zueinander ausgerichtet. Durch die entgegengesetzte Anordnung der ersten Elektrode 102 und der zweiten Elektrode 104 bewirkt das Antriebssignal entgegengesetzte Kräfte an den Elektroden. Um gleichgerichtete Kräfte zu erhalten, kann an einer der Elektroden ein invertiertes Signal angelegt werden.

In einem Ausführungsbeispiel sind die dritte Elektrode 106 und die vierte Elektrode 108 entgegengesetzt zueinander ausgerichtet. Durch die entgegengesetzte Anordnung der dritten Elektrode 106 und der vierten Elektrode 108 bewirkt die Relativbewegung entgegengesetzte Signale an den Elektroden.

In einem Ausführungsbeispiel ist die erste Kapazität abhängig von einem ersten Abstand zwischen der ersten Elektrode 102 und der dritten Elektrode 106. Je größer der Abstand zwischen zwei Elektroden ist, umso geringer ist die Kapazität des durch die Elektroden ausgebildeten Kondensators.

In einem Ausführungsbeispiel ist die zweite Kapazität abhängig von einem zweiten Abstand zwischen der zweiten Elektrode 104 und der vierten Elektrode 108. Je größer der Abstand zwischen den zwei Elektroden ist, umso geringer ist die Kapazität des durch die beiden Elektroden ausgebildeten Kondensators.

In einem Ausführungsbeispiel sind die erste Elektrode 102 und die dritte Elektrode 106 als Kammelektroden ausgebildet, die ineinander kämmen. Dabei ist die erste Kapazität abhängig von einer ersten Überlappung zwischen der ersten Elektrode 102 und der dritten Elektrode 106. Bei einer Kammelektrode ist ein Abstand von Fingern eines Kammes zu Fingern des anderen Kammes näherungsweise konstant. Die Kapazität ist dabei abhängig von einer Fläche, auf der sich die Finger überlappen. Je größer die Fläche, umso größer ist die Kapazität.

In einem Ausführungsbeispiel sind die zweite Elektrode 104 und die vierte Elektrode 108 als Kammelektroden ausgebildet, die ineinander kämmen. Dabei ist die zweite Kapazität abhängig ist von einer zweiten Überlappung zwischen der zweiten Elektrode 104 und der vierten Elektrode 108. Bei einer Kammelektrode ist ein Abstand von Fingern eines Kammes zu Fingern des anderen Kammes näherungsweise konstant. Die Kapazität ist dabei abhängig von einer Fläche, auf der sich die Finger überlappen. Je größer die Fläche, umso größer ist die Kapazität.

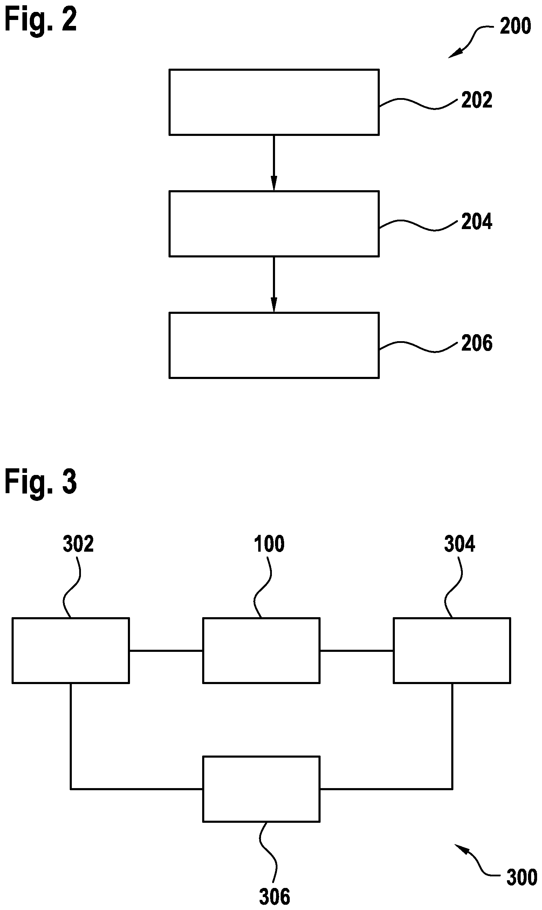

Fig. 2 zeigt ein Ablaufdiagramm eines Verfahrens 200 zum Betreiben eines Inertialsensors gemäß einem Ausführungsbeispiel der vorliegenden Erfindung. Das Verfahren weist einen Schritt 202 des Bereitstellens, einen Schritt 204 des Abgreifens und einen Schritt 206 des Anpassens auf. Das Verfahren 200 kann an einem Inertialsensor, wie er in Fig. 1 dargestellt ist, ausgeführt werden. Im Schritt 202 des Bereitstellens wird ein Antriebssignal für den ersten Kondensator und für den zweiten Kondensator an der ersten Schnittstelle bereitgestellt. Dabei wird an der ersten Elektrode das Antriebssignal mit einer gegenüber der zweiten Elektrode invertierten Amplitude bereitgestellt, um den ersten Körper zu einer Schwingung anzuregen. Im Schritt 204 des Abgreifens wird ein durch die Schwingung resultierendes Signal an der zweiten Schnittstelle abgegriffen, um eine Phasenlage der Schwingung zu erfassen. Im Schritt 206 des Anpassens wird eine Kreisfrequenz des Antriebssignals unter Verwendung des Signals angepasst, um den Sensorkörper in Resonanz schwingen zu lassen.

In einem Ausführungsbeispiel wird im Schritt 204 des Abgreifens ein Stromfluss an der zweiten Schnittstelle abgegriffen. Durch eine, aufgrund einer Änderung der Relativposition resultierenden Kapazitätsveränderung fließt ein Strom, um ein Gleichgewicht an Ladungen zwischen den Elektroden des Kondensators wieder herzustellen.

In einem Ausführungsbeispiel weist das Verfahren 200 einen Schritt des Wandelns auf, in dem der Stromfluss in eine Spannung umgewandelt wird. Der Stromfluss fließt über einen bekannten Widerstand. Dabei fällt an dem Widerstand eine elektrische Spannung ab, die proportional zu dem Stromfluss ist, der durch die Kapazitätsveränderung hervorgerufen wird.

In einem Ausführungsbeispiel wird im Schritt 206 des Anpassens die Kreisfrequenz unter Verwendung der Spannung angepasst. Die Spannung ist als Signal besonders geeignet, um zum Anpassen verwendet zu werden, da elektronische Bauelemente bevorzugt elektrische Spannungen einlesen und/oder bereitstellen.

In einem Ausführungsbeispiel weist das Verfahren einen Schritt des Verschiebens auf, in dem eine Phase des Signals um einen vorbestimmten Winkel verschoben wird. Bei Schwingungen resultieren elektrische Phänomene, die eine Phasenverschiebung zwischen Strom und Spannung bewirken. Beim Umwandeln des Signals von Strom in Spannung resultiert dagegen keine entgegengerichtete Phasenverschiebung. Diese Phasenverschiebung wird nachträglich auf elektronischem Weg erreicht. Dabei kann die Phase mit einer Toleranz verschoben werden, um beispielsweise eine Signallaufzeit zu kompensieren.

In einem Ausführungsbeispiel wird im Schritt 206 des Anpassens die Kreisfrequenz unter Verwendung einer Phasenregelschleife angepasst. Eine Phasenregelschleife oder Phase-Locked-Loop passt ein Ausgangssignal an die Phase eines Eingangssignals an. Hier wird ein Wechselspannungsanteil des Antriebssignals phasenrichtig zu der Phase des Signals bereitgestellt, um den Inertialsensor in Resonanz anzuregen.

In einem Ausführungsbeispiel wird im Schritt 206 des Anpassens die Kreisfrequenz unter Verwendung eines Lock-in Verstärkers angepasst. Durch einen Lock-in Verstärker können Rauschen und Interferenzen ausgefiltert werden und beeinflussen damit das Anpassen nicht.

Der hier vorgestellte Ansatz stellt ein Auswertekonzept für den Antriebsstrang eines Drehratensensors oder Beschleunigungssensors ohne Antriebsdetektionselektroden vor.

Bei Drehratensensoren oder Beschleunigungssensoren können zur Sensierung der Antriebsbewegung separat angebrachte Antriebsdetektionselektroden verwendet werden. Die Kapazitätsänderung, die proportional zur Auslenkung ist, wird dabei entweder mit trägerfrequenten Verfahren bzw. Basisband-Verfahren über die Antriebsdetektionselektroden ausgewertet. Bedingt durch die zwingende geometrische Anordnung der Detektionselektroden fallen in der Regel die Antriebskämme kleiner aus, was sich unter anderem in einer erhöhten Betriebsspannung widerspiegelt.

In dem hier vorgestellten Ansatz wird z. B. ein Drehratensensor verwendet, bei dem das mikroelektromechanische Sensorelement (MEMS-Element) keine Antriebsdetektionselektroden aufweist. Über einen Regelkreis im Application Specific Integrated Cirquit (ASIC) mit zumindest einer Strom-Spannung Wandlerstufe (I-V-Wandler oder U-I Wandler) und einem 90°-Phasenschieber werden Signale der Antriebskämme ausgewertet. Alternativ kann ein lock-in Verstärker im ASIC verwendet werden.

Durch den hier vorgestellten Ansatz wird eine Einsparung von Fläche ermöglicht, da die Antriebsdetektionselektroden entfallen können. Alternativ können die Antriebskämme vergrößert werden, was zu niedrigeren Betriebsspannungen führen würde. Weiterhin können Pads zum ASIC eingespart werden, was zu weniger parasitären Kapazitäten führt. Ebenso ermöglicht der hier vorgestellte Ansatz einen Entfall von kapazitivem Übersprechen zwischen Antriebselektroden und Antriebsdetektionselektroden.

Um den Drehratensensor zur resonanten Schwingung anzuregen, wird wie üblicherweise eine asymmetrische Gleichspannung mit gleichphasigem Wechselanteil an den Antriebskämmen angelegt. Dabei liegt an der äußeren Antriebselektrode AA die Spannung

$$-U_{dc} + U_{ac} \cos(\Omega t)$$

und an der Innenelektrode AI die Spannung

$$U_{dc} + U_{ac} \cos(\Omega t) \text{ an.}$$

Dabei bezeichnet $U_{dc}$ eine Gleichspannung, $U_{ac}$ die Wechselspannungsamplitude und $\Omega$ die anregende Kreisfrequenz. Die gemeinsam gegenüberliegende CM Elektrode wird direkt an den invertierenden Anschluss des Strom-Spannung-Wandlers verbunden. Die Kapazität zwischen AA-CM bzw. AI-CM lässt sich schreiben als

$$C_{AA}(t) = C_0 - \Delta C F \frac{\left(\left(-\omega^2 + \Omega^2\right)\cos(\Omega t) - \sin(\Omega t)\Omega\delta\right)}{\left(\Omega^2 - \omega^2\right)^2 + (\delta\Omega)^2}$$

Bzw.

$$C_{AI}(t) = C_0 + \Delta C F \frac{\left(\left(-\omega^2 + \Omega^2\right)\cos(\Omega t) - \sin(\Omega t)\Omega\delta\right)}{\left(\Omega^2 - \omega^2\right)^2 + (\delta\Omega)^2}$$

Dabei ist $\omega$ die Resonanzfrequenz des Inertialsensors, $C_o$ ist die Kapazität ohne Auslenkung, $\Delta C$ die Kapazitätsänderung pro Meter, F die Beschleunigung und $\delta$ die mechanische Dämpfung. Der Strom i(t), der mithilfe des Widerstandes R zu einer Spannung $u_a(t) = -i(t)R$ umgewandelt wird, ergibt sich in der vorgeschlagenen Schaltung zu:

$$i(t) = \left( \frac{2\Delta C F \Omega U_{dc}\left(\omega^2 - \Omega^2\right)}{\left(\Omega^2 - \omega^2\right)^2 + (\delta\Omega)^2} - 2U_{ac}\Omega C_0 \right)\sin(\Omega t) - \left( \frac{2\Delta C F \delta \Omega^2 U_{dc}}{\left(\Omega^2 - \omega^2\right)^2 + (\delta\Omega)^2} \right)\cos(\Omega t)$$

Wird von der Ausgangsspannung $u_a(t)$ die Spannung $2U_{ac}\Omega C_o R\sin(\Omega t)$ subtrahiert, so ergibt sich die Phasenbeziehung $\varphi$ zu dem am Eingang liegenden Wechselsignal von

$$\varphi = \tan^{-1}\left( \frac{\Omega^2 - \omega^2}{\delta\Omega^2} \right)$$

Für den in Betrieb interessanten Resonanzfall ist lediglich darauf zu darauf zu achten, dass die Phasenverschiebung genau auf 180° gehalten wird.

Fig. 3 zeigt ein Blockschaltbild einer Vorrichtung 300 zum Betreiben eines Inertialsensors 100 gemäß einem Ausführungsbeispiel der vorliegenden Erfindung. Der Inertialsensor 100 entspricht dem Inertialsensor in Fig. 1. Die Vorrichtung 300 weist eine Einrichtung 302 zum Bereitstellen, eine Einrichtung 304 zum Abgreifen und eine Einrichtung 306 zum Anpassen auf. Die Einrichtung 302 zum Bereitstellen ist dazu ausgebildet, ein Antriebssignal für den ersten Kondensator und für den zweiten Kondensator an der ersten Schnittstelle bereitzustellen. Dabei wird an der ersten Elektrode das Antriebssignal mit einer gegenüber der zweiten Elektrode invertierten Amplitude bereitgestellt, um den ersten Körper zu einer Schwingung anzuregen. Die Einrichtung 304 zum

Abgreifen ist dazu ausgebildet, ein durch die Schwingung resultierendes Signal an der zweiten Schnittstelle abzugreifen, um eine Phasenlage der Schwingung zu erfassen. Die Einrichtung 306 zum Anpassen ist dazu ausgebildet eine Kreisfrequenz des Antriebssignals unter Verwendung des Signals anzupassen, um den ersten Körper in Resonanz schwingen zu lassen.

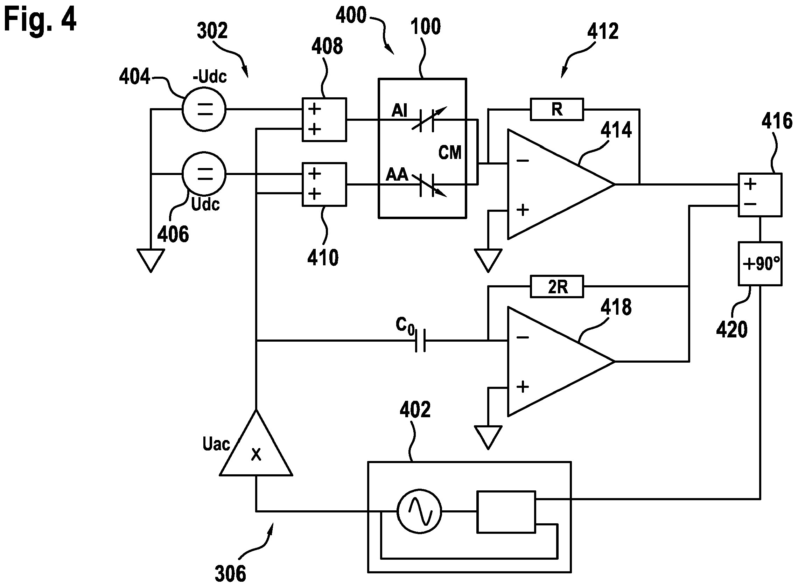

Fig. 4 zeigt ein Schaltbild einer Auswerteschaltung 400 mit einer Phasenregelschleife 402 gemäß einem Ausführungsbeispiel der vorliegenden Erfindung. Die Auswerteschaltung 400 bildet die Vorrichtung zum Betreiben eines Inertialsensors aus Fig. 3 unter Verwendung diskreter Bauelemente ab.

In der hier gezeigten Auswerteschaltung 400 weist die Einrichtung 302 zum Bereitstellen eine erste Gleichspannungsquelle 404 und eine zweite Gleichspannungsquelle 406 sowie einen ersten Addierer 408 und einen zweiten Addierer 410 auf. Die erste Gleichspannungsquelle 404 ist mit einem ersten positiven Eingang des ersten Addierers 408 verbunden. Die zweite Gleichspannungsquelle 406 ist mit einem ersten positiven Eingang des zweiten Addierers 410 verbunden. Dabei stellt die erste Gleichspannungsquelle 404 einen negativen Gleichspannungsanteil $-U_{dc}$ und die zweite Gleichspannungsquelle 406 stellt einen positiven Gleichspannungsanteil $U_{dc}$ bereit. Ein zweiter positiver Eingang des ersten Addierers 408 und ein zweiter positiver Eingang des zweiten Addierers 410 sind mit der Einrichtung 306 zum Anpassen verbunden. Über die zweiten positiven Eingänge wird in den Addierern 408, 410 ein Wechselspannungsanteil $U_{ac}$ zu den Gleichspannungsanteilen $U_{dc}$ und $-U_{dc}$ addiert. Der erste Addierer 408 ist über die erste Schnittstelle des Inertialsensors 100 mit der ersten Elektrode des Inertialsensors 100 verbunden. Der zweite Addierer 410 ist über die erste Schnittstelle mit der zweiten Elektrode des Inertialsensors 100 verbunden.

Mit der zweiten Schnittstelle des Inertialsensors 100 ist erfindungsgemäß eine Einrichtung 412 zum Wandeln verbunden. Die Einrichtung 412 zum Wandeln ist dazu ausgebildet, an der dritten Elektrode des Inertialsensors 100 und an der vierten Elektrode des Inertialsensors 100 das Signal abzugreifen. Das Signal ist hier ein an der dritten Elektrode und an der vierten Elektrode resultierender elektrischer Stromfluss. Die Einrichtung 412 zum Wandeln ist dazu ausgebildet, den Stromfluss in eine elektrische Spannung zu wandeln. Die Einrichtung 412 zum Wandeln ist als Strom-Spannungs-Wandler 412 aufgebaut. Dazu weist die Einrichtung 412 zum Wandeln einen ohmschen Widerstand R auf, über den der Stromfluss fließt. An dem Widerstand R wird unter Verwendung eines invertierenden Operationsverstärkers 414 die Spannung abgegriffen. Die Spannung repräsentiert damit das Signal des Inertialsensors 100.

Der Operationsverstärker 414 ist mit einem positiven Eingang eines dritten Addierers 416 verbunden. An einem negativen bzw. invertierenden Eingang des dritten Addierers 416 liegt über einen weiteren Strom-Spannungs-Wandler 418 und einen Kondensator $C_0$ der Wechselspannungsanteil $U_{ac}$ an, der an dem ersten Addierer 408 und dem zweiten Addierer 410 anliegt. Dabei weist der weitere Strom Spannungs-Wandler 418 einen weiteren ohmschen Widerstand 2R auf.

Der dritte Addierer 416 ist mit einem Phasenschieber 420 verbunden. In dem Phasenschieber 420 wird eine Phase des Signals um 90° bzw. $\pi/2$ verschoben. Der Phasenschieber 420 ist mit der Phasenregelschleife 402 verbunden, die Bestandteil der Einrichtung 306 zum Anpassen ist. Durch die Phasenregelschleife 402 wird die Phase des Wechselspannungsanteils $U_{ac}$ so angepasst, dass das Signal maximiert wird. Wenn das Signal sein Maximum erreicht, schwingt der erste Körper des Inertialsensors 100 in Resonanz. Der Wechselspannungsanteil $U_{ac}$ wird durch einen Verstärker x verstärkt und an den zweiten positiven Eingängen des ersten Addierers 408 und des zweiten Addierers 410 eingespeist.

Eine technische Realisierung mittels einer PLL (Phasenregelschleife) lässt sich dadurch erreichen, dass das aufbereitete Ausgangsignal nochmals um 90° geschoben wird.

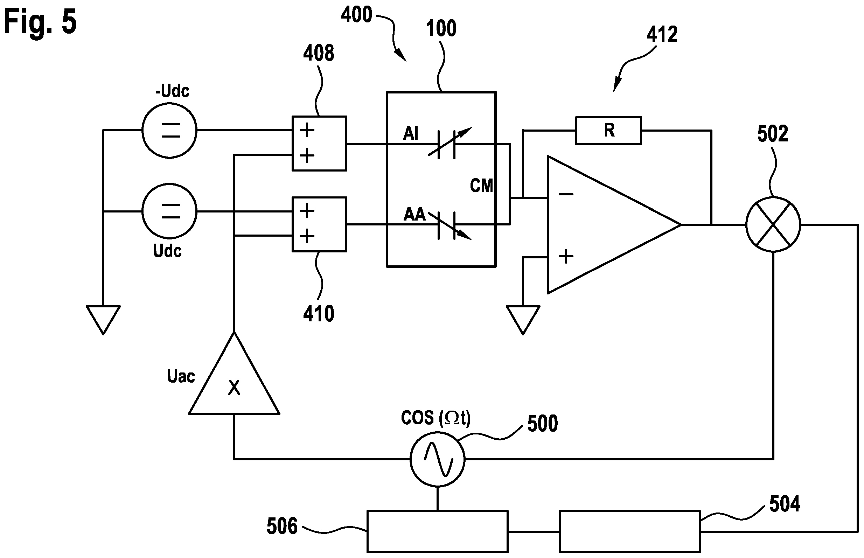

Fig. 5 zeigt eine Darstellung eines schematischen Aufbaus einer Auswerteschaltung 400 für einen Inertialsensor 100 gemäß einem Ausführungsbeispiel der vorliegenden Erfindung. Die Auswerteschaltung 400 entspricht im Wesentlichen der Auswerteschaltung in Fig. 4. Wie in Fig. 4 wird der erste Körper des Inertialsensors 100 durch das Antriebssignal von dem ersten Addierer 408 und dem zweiten Addierer 410 zum Schwingen angeregt. Der Wechselspannungsanteil $U_{ac}$ kommt hier von einer Wechselspannungsquelle 500. Die Wechselspannungsquelle 500 stellt den Wechselspannungsanteil $U_{ac}$ mit einer durch $\cos(\Omega t)$ beschriebenen harmonischen Schwingung bereit.

Das Signal des Inertialsensors 100 wird durch die Einrichtung 412 zum Wandeln in eine Spannung gewandelt. Im Gegensatz zu Fig. 4 wird das Signal nach der Einrichtung 412 zum Wandeln in einem Multiplizierer 502 mit dem Wechselspannungsanteil $U_{ac}$ multipliziert, sodass das Signal eine erhöhte Frequenz aufweist. Das Signal wird durch einen Tiefpass 504 gefiltert, wobei ein hochfrequenter Anteil des Signals ausgefiltert wird. Ein niederfrequenter Anteil des Signals dient als Eingangsgröße eines Maximierers 506, der ein Referenzsignal für die Wechselspannungsquelle 500 bereitstellt. Der Maximierer 506 passt das Referenzsignal so lange an, bis der niederfrequente Anteil einen Maximalwert erreicht.

Alternativ lässt sich die Resonanzbedingung auch einhalten, indem lediglich die Amplitude des $\cos(\Omega t)$-Terms maximiert wird.

Technisch kann das mit dem bewährten lock-in Verfahren bewerkstelligt werden. Wird das Ausgangsignal nochmals mit $\cos(\Omega t)$ multipliziert, resultiert ein Signal, dass sich aus einem zu der Amplitude proportionalen Gleichanteil und einem mit doppelter Frequenz oszillierenden Anteil zusammensetzt. Da sich die Amplitudeninformation im Gleichanteil befindet, wird im Anschluss, mithilfe eines Tiefpasses, der $2\Omega$-Anteil herausgefiltert. Der Maximierer variiert die Kreisfrequenz $\Omega$ solange, bis der Gleichanteil sein Maximum erreicht hat.

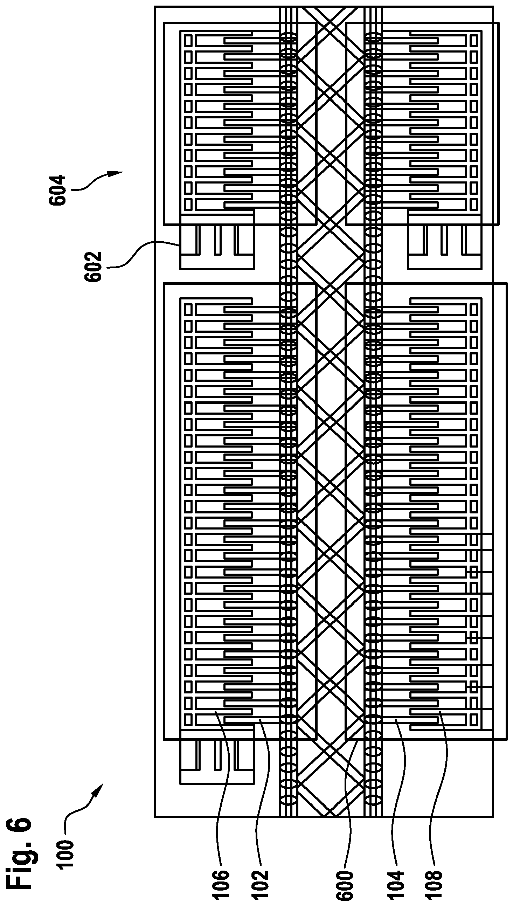

Fig. 6 zeigt eine Darstellung eines Antriebstranges eines Inertialsensors 100 mit Kammelektroden oder Antriebskämmen gemäß einem Ausführungsbeispiel der vorliegenden Erfindung. Der Inertialsensor 100 entspricht dabei im Wesentlichen dem Inertialsensor in Fig. 1. Dabei sind die Elektroden 102, 104, 106, 108 als Kammelektroden ausgebildet. Der Inertialsensor 100 weist als ersten Körper einen Sensorkörper 600 und als zweiten Körper einen Grundkörper 602 auf. Der Sensorkörper 600 ist schwingfähig in einer Aussparung des Grundkörpers 602 gelagert. Die erste Elektrode 102 und die zweite Elektrode 104 sind an gegenüberliegenden Seiten des Sensorkörpers 600 angeordnet. Die dritte Elektrode 106 und die vierte Elektrode 108 sind an gegenüberliegenden Seiten der Aussparung angeordnet. Dabei kämmen die erste Elektrode 102 und die dritte Elektrode 106 miteinander. Ebenso kämmen die zweite Elektrode 104 und die vierte Elektrode 108 miteinander. Der Sensorkörper 600 weist eine versteifende Rippenstruktur auf.

In einem Ausführungsbeispiel ist der erste Körper der Grundkörper 602. Der zweite Körper ist der Sensorkörper 600.

In einem Ausführungsbeispiel sind die erste Elektrode 102 und die zweite Elektrode 104, an denen das Antriebssignal angelegt wird, fest mit dem Sensorkörper 600 verbunden. Da die dritte Elektrode 106 und die vierte Elektrode 108 auf dem gleichen elektrischen Potenzial liegen, resultiert durch das Antriebssignal eine auslenkende Kraft, die den Sensorkörper 600 relativ zum Grundkörper 602 verschiebt. Die Verschiebung resultiert in einer Veränderung der Kapazität in beiden Kondensatoranordnungen. Durch die veränderte Kapazität resultiert ein Stromfluss, der als Signal abgegriffen wird. Das Antriebssignal wird als harmonische Schwingung bereitgestellt und regt den Sensorkörper 600 zu einer mechanischen Schwingung an. Die mechanische Schwingung erreicht eine maximale Amplitude, wenn das Antriebssignal mit einer Resonanzfrequenz des Sensorkörpers 600 bereitgestellt wird. Dabei ist der Stromfluss an der zweiten Schnittstelle mit der mechanischen Schwingung gekoppelt.

In einem Ausführungsbeispiel wird für den hier vorgestellten Ansatz ein Inertialsensor mit Antriebsdetektionselektroden 604 oder Antriebsdetektionskämme verwendet. Die Antriebsdetektionselektroden 604 sind dabei jeweils auf ein gleiches elektrisches Potenzial, wie benachbarte Elektroden 102, 104, 106, 108 geschaltet. Dadurch kann das hier vorgestellte Verfahren auch bei einem Inertialsensor mit Antriebsdetektionselektroden 604 angewendet werden.

In dem hier vorgestellten Ansatz wird ein Auswertekonzept vorgeschlagen, dass zur Sensierung der Antriebsbewegung lediglich die Antriebskämme 102, 104, 106, 108 selbst nutzt.

Die beschriebenen und in den Figuren gezeigten Ausführungsbeispiele sind nur beispielhaft gewählt. Unterschiedliche Ausführungsbeispiele können im Rahmen des durch die Ansprüche definierten Schutzumfangs vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können die hier vorgestellten Verfahrensschritte wiederholt sowie in einer anderen als in der beschriebenen Reihenfolge ausgeführt werden.

## Patentansprüche

1. Inertialsensor (100) mit folgenden Merkmalen:

   einem ersten Körper mit einer ersten Elektrode (102) und einer zweiten Elektrode (104);
   einem relativ zu dem ersten Körper beweglich gelagerten zweiten Körper mit einer dritten Elektrode (106) und einer vierten Elektrode (108), wobei die erste Elektrode (102) und die dritte Elektrode (106) einen ersten Kondensator mit einer veränderbaren ersten Kapazität ausbilden und die zweite Elektrode (104) und die vierte Elektrode (108) einen zweiten Kondensator mit einer veränderbaren zweiten Kapazität ausbilden;
   einer ersten Schnittstelle (110) zum Bereitstellen eines Antriebssignals an der ersten Elektrode (102) und an der zweiten Elektrode (104), um eine Relativbewegung zwischen dem ersten Körper und dem zweiten Körper zu bewirken; und
   einer zweiten Schnittstelle (112) mit welcher eine Einrichtung (412) zum Wandeln verbunden ist, **dadurch gekennzeichnet, dass** die Einrichtung (412) zum Wandeln dazu ausgebildet ist, zwischen der dritten Elektrode (106) und der vierten Elektrode (108) des Inertialsensors (100) ein Signal abzugreifen, wobei das Signal ein zwischen der dritten Elektrode (106) und der vierten Elektrode (108) resultierender elektrischer Stromfluss ist, wobei der elektrische Stromfluss ein Maß für eine Änderung einer Relativposition des ersten Körpers zu dem zweiten Körper ist.

2. Inertialsensor (100) gemäß einem der vorangegangenen Ansprüche, bei dem die erste Elektrode (102) und die zweite Elektrode (104) entgegengesetzt zueinander ausgerichtet sind und/oder die dritte Elektrode (106) und die vierte Elektrode (108) entgegengesetzt zueinander ausgerichtet sind.

3. Inertialsensor (100) gemäß einem der vorangegangenen Ansprüche, bei dem die erste Kapazität abhängig ist von einem ersten Abstand zwischen der ersten Elektrode (102) und der dritten Elektrode (106) und/oder die zweite Kapazität abhängig ist von einem zweiten Abstand zwischen der zweiten Elektrode (104) und der vierten Elektrode (108).

4. Inertialsensor (100) gemäß einem der vorangegangenen Ansprüche, bei dem die erste Elektrode (102) und die dritte Elektrode (106) und/oder die zweite Elektrode (104) und die vierte Elektrode (108) als Kammelektroden ausgebildet sind, die ineinander kämmen, wobei die erste Kapazität abhängig ist von einer ersten Überlappung zwischen der ersten Elektrode (102) und der dritten Elektrode (106) und/oder die zweite Kapazität abhängig ist von einer zweiten Überlappung zwischen der zweiten Elektrode (104) und der vierten Elektrode (108).

5. Verfahren (200) zum Betreiben eines Inertialsensors (100) gemäß einem der Ansprüche 1 bis 4, wobei das Verfahren (200) die folgenden Schritte aufweist:

   Bereitstellen (202) eines Antriebssignals für den ersten Kondensator und für den zweiten Kondensator an der ersten Schnittstelle (110), wobei an der ersten Elektrode (102) das Antriebssignal mit einer gegenüber der zweiten Elektrode (104) invertierten Amplitude bereitgestellt wird, um den ersten Körper zu einer Schwingung anzuregen;
   Abgreifen (204) eines durch die Schwingung resultierenden Signals an der zweiten Schnittstelle (112), um eine Phasenlage der Schwingung zu erfassen, wobei das Signal ein zwischen der dritten Elektrode (106) und der vierten Elektrode (108) resultierender elektrischer Stromfluss ist, wobei der elektrische Stromfluss ein Maß für eine Änderung einer Relativposition des ersten Körpers zu dem zweiten Körper ist;
   Anpassen (206) einer Kreisfrequenz des Antriebssignals unter Verwendung des Signals, um den ersten Körper in Resonanz schwingen zu lassen.

6. Verfahren (200) gemäß Anspruch 5, wobei das Verfahren (200) einen Schritt des Wandelns aufweist, in dem der Stromfluss in eine Spannung umgewandelt wird, wobei im Schritt (206) des Anpassens die Kreisfrequenz unter Verwendung der Spannung angepasst wird.

7. Verfahren (200) gemäß einem der vorangegangenen Ansprüche, mit einem Schritt des Verschiebens, in dem eine Phase des Signals um einen vorbestimmten Winkel verschoben wird.

8. Verfahren (200) gemäß einem der vorangegangenen Ansprüche, bei dem im Schritt (206) des Anpassens die Kreisfrequenz unter Verwendung einer Phasenregelschleife (402) angepasst wird.

9. Verfahren (200) gemäß einem der vorangegangenen Ansprüche, bei dem im Schritt (406) des Anpassens die Kreisfrequenz unter Verwendung eines Lock-in-Verstärkers angepasst wird.

10. Vorrichtung (300) zum Betreiben eines Inertialsensors (100) gemäß einem der Ansprüche 1 bis 4, wobei die Vorrichtung (300) die folgenden Merkmale aufweist:

   eine Einrichtung (302) zum Bereitstellen eines Antriebssignals für den ersten Kondensator und für den zweiten Kondensator an der ersten Schnittstelle (110), wobei an der ersten Elektrode (102) das Antriebssignal mit einer gegenüber der zweiten Elektrode (104) invertierten Amplitude bereitgestellt wird, um den ersten Körper zu einer Schwingung anzuregen;
   eine Einrichtung (304) zum Abgreifen eines durch die Schwingung resultierenden Signals an der zweiten Schnittstelle (112), um eine Phasenlage der Schwingung zu erfassen, wobei das Signal ein zwischen der dritten Elektrode (106) und der vierten Elektrode (108) resultierender elektrischer Stromfluss ist, wobei der elektrische Stromfluss ein Maß für eine Änderung einer Relativposition des ersten Körpers zu dem zweiten Körper ist;
   eine Einrichtung (306) zum Anpassen einer Kreisfrequenz des Antriebssignals unter Verwendung des Signals, um den ersten Körper in Resonanz schwingen zu lassen.

**Claims**

1. Inertial sensor (100) having the following features:

   a first body having a first electrode (102) and a second electrode (104);
   a second body which is mounted movably relative to the first body and has a third electrode (106) and a fourth electrode (108), wherein the first electrode (102) and the third electrode (106) form a first capacitor with a variable first capacitance and the second electrode (104) and the fourth electrode (108) form a second capacitor with a variable second capacitance;
a first interface (110) for providing a drive signal at the first electrode (102) and at the second electrode (104) in order to cause a relative movement between the first body and the second body; and
a second interface (112), to which a conversion device (412) is connected, **characterized in that**
the conversion device (412) is designed to tap off a signal between the third electrode (106) and the fourth electrode (108) of the inertial sensor (100), wherein the signal is an electrical current flow resulting between the third electrode (106) and the fourth electrode (108), wherein the electrical current flow is a measure of a change in a relative position of the first body with respect to the second body.

2. Inertial sensor (100) according to one of the preceding claims, in which the first electrode (102) and the second electrode (104) are oriented in a manner opposite one another and/or the third electrode (106) and the fourth electrode (108) are oriented in a manner opposite one another.

3. Inertial sensor (100) according to one of the preceding claims, in which the first capacitance is dependent on a first distance between the first electrode (102) and the third electrode (106) and/or the second capacitance is dependent on a second distance between the second electrode (104) and the fourth electrode (108).

4. Inertial sensor (100) according to one of the preceding claims, in which the first electrode (102) and the third electrode (106) and/or the second electrode (104) and the fourth electrode (108) are in the form of comb electrodes which engage in one another, wherein the first capacitance is dependent on a first overlap between the first electrode (102) and the third electrode (106) and/or the second capacitance is dependent on a second overlap between the second electrode (104) and the fourth electrode (108).

5. Method (200) for operating an inertial sensor (100) according to one of Claims 1 to 4, wherein the method (200) has the following steps of:

   providing (202) a drive signal for the first capacitor and for the second capacitor at the first interface (110), wherein the drive signal is provided at the first electrode (102) with an amplitude which is inverted with respect to the second electrode (104) in order to excite the first body to vibrate;
   tapping off (204) a signal resulting from the vibration at the second interface (112) in order to capture a phase angle of the vibration, wherein the signal is an electrical current flow resulting between the third electrode (106) and the fourth electrode (108), wherein the electrical current flow is a measure of a change in a relative position of the first body with respect to the second body;
   adapting (206) an angular frequency of the drive signal using the signal in order to cause the first body to vibrate at resonance.

6. Method (200) according to Claim 5,
   wherein the method (200) has a conversion step in which the current flow is converted into a voltage, wherein the angular frequency is adapted using the voltage in the adapting step (206).

7. Method (200) according to one of the preceding claims, having a shifting step in which a phase of the signal is shifted by a predetermined angle.

8. Method (200) according to one of the preceding claims, in which the angular frequency is adapted using a phase locked loop (402) in the adapting step (206).

9. Method (200) according to one of the preceding claims, in which the angular frequency is adapted using a lock-in amplifier in the adapting step (406).

10. Apparatus (300) for operating an inertial sensor (100) according to one of Claims 1 to 4, wherein the apparatus (300) has the following features:

    a device (302) for providing a drive signal for the first capacitor and for the second capacitor at the first interface (110), wherein the drive signal is provided at the first electrode (102) with an amplitude which is inverted with respect to the second electrode (104) in order to excite the first body to vibrate;
    a device (304) for tapping off a signal resulting from the vibration at the second interface (112) in order to capture a phase angle of the vibration, wherein the signal is an electrical current flow resulting between the third electrode (106) and the fourth electrode (108), wherein the electrical current flow is a measure of a change in a relative position of the first body with respect to the second body;
a device (306) for adapting an angular frequency of the drive signal using the signal in order to cause the first body to vibrate at resonance.

**Revendications**

1. Capteur inertiel (100) présentant les caractéristiques suivantes :

   un premier corps présentant une première électrode (102) et une deuxième électrode (104) ;
   un deuxième corps monté de manière mobile par rapport au premier corps et présentant une troisième électrode (106) et une quatrième électrode (108), dans lequel la première électrode (102) et la troisième électrode (106) forment un premier condensateur présentant une première capacité variable et la deuxième électrode (104) et la quatrième électrode (108) forment un deuxième condensateur présentant une deuxième capacité variable ;
   une première interface (110) destinée à fournir un signal d'attaque à la première électrode (102) et à la deuxième électrode (104) pour provoquer un mouvement relatif entre le premier corps et le deuxième corps ; et
   une deuxième interface (112) à laquelle est relié un dispositif (412) de conversion,
   **caractérisé en ce que** le dispositif (412) de conversion est conçu pour prélever un signal entre la troisième électrode (106) et la quatrième électrode (108) du capteur inertiel (100), dans lequel le signal est un flux de courant électrique résultant entre la troisième électrode (106) et la quatrième électrode (108), dans lequel le flux de courant électrique est une mesure d'une variation de la position relative du premier corps par rapport au deuxième corps.

2. Capteur inertiel (100) selon l'une des revendications précédentes, dans lequel la première électrode (102) et la deuxième électrode (104) sont orientées en sens opposé et/ou la troisième électrode (106) et la quatrième électrode (108) sont orientées en sens opposé.

3. Capteur inertiel (100) selon l'une des revendications précédentes, dans lequel la première capacité est fonction d'une première distance entre la première électrode (102) et la troisième électrode (106) et/ou la deuxième capacité est fonction d'une deuxième distance entre la deuxième électrode (104) et la quatrième électrode (108).

4. Capteur inertiel (100) selon l'une des revendications précédentes, dans lequel la première électrode (102) et la troisième électrode (106) et/ou la deuxième électrode (104) et la quatrième électrode (108) sont réalisées sous forme d'électrodes en peigne qui s'engrènent mutuellement, dans lequel la première capacité dépend d'un premier chevauchement entre la première électrode (102) et la troisième électrode (106) et/ou la deuxième capacité dépend d'un deuxième chevauchement entre la deuxième électrode (104) et la quatrième électrode (108).

5. Procédé (200) pour faire fonctionner un capteur inertiel (100) selon l'une des revendications 1 à 4, le procédé (200) comportant les étapes suivantes :

   fournir (202) un signal d'attaque destiné au premier condensateur et au deuxième condensateur au niveau de la première interface (110), dans lequel le signal d'attaque est fourni à la première électrode (102) avec une amplitude inversée par rapport à la deuxième électrode (104) afin d'exciter le premier corps en oscillation ;
   prélever (204) un signal résultant de l'oscillation au niveau de la deuxième interface (112) pour détecter une position de phase de l'oscillation, dans lequel le signal est un flux de courant électrique résultant entre la troisième électrode (106) et la quatrième électrode (108), dans lequel le flux de courant électrique est une mesure d'une variation de position relative du premier corps par rapport au deuxième corps ;
   ajuster (206) une fréquence angulaire du signal d'attaque au moyen du signal afin de faire osciller le premier corps en résonance.

6. Procédé (200) selon la revendication 5, dans lequel
   le procédé (200) comprend une étape de conversion lors de laquelle le flux de courant est converti en une tension, dans lequel, lors de l'étape (206) d'ajustement, la fréquence angulaire est ajustée au moyen de la tension.

7. Procédé (200) selon l'une des revendications précédentes, comprenant une étape de décalage lors de laquelle une phase du signal est décalée d'un angle prédéterminé.

8. Procédé (200) selon l'une des revendications précédentes, dans lequel, lors de l'étape (206) d'ajustement, la fréquence angulaire est ajustée au moyen d'une boucle à verrouillage de phase (402).

9. Procédé (200) selon l'une des revendications précédentes, dans lequel, lors de l'étape (406) d'ajustement, la fréquence angulaire est ajustée au moyen d'un amplificateur à verrouillage.

10. Dispositif (300) pour faire fonctionner un capteur inertiel (100) selon l'une des revendications 1 à 4, dans lequel le dispositif (300) présente les caractéristiques suivantes :

un moyen (302) permettant de fournir un signal de commande destiné au premier condensateur et au deuxième condensateur au niveau de la première interface (110), dans lequel le signal de commande est fourni à la première électrode (102) avec une amplitude inversée par rapport à la deuxième électrode (104) afin d'exciter le premier corps en oscillation ;
un moyen (304) permettant de prélever un signal résultant de l'oscillation au niveau de la deuxième interface (112) pour détecter une position de phase de l'oscillation, dans lequel le signal est un flux de courant électrique résultant entre la troisième électrode (106) et la quatrième électrode (108), dans lequel le flux de courant électrique est une mesure d'une variation de position relative du premier corps par rapport au deuxième corps ;
un moyen (306) permettant d'ajuster une fréquence angulaire du signal d'attaque au moyen du signal pour faire osciller le premier corps en résonance.

## Fig. 1

**Fig. 2**

**Fig. 3**

**Fig. 4**

EP 2 876 412 B1

Fig. 5

EP 2 876 412 B1

Fig. 6

**EP 2 876 412 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012200132 A1
- US 2010043551 A1
- EP 0840092 A2